# EUROPÄISCHE PATENTSCHRIFT

(11) **EP 0 764 509 B1**
(45) Veröffentlichungstag und Bekanntmachung des Hinweises auf die Patenterteilung: **27.06.2001**
(21) Anmeldenummer: 96114993.7
(22) Anmeldetag: 19.09.1996
(51) Int. Cl.: B29C 45/17

(54) **Holmlose Fomschliesseinrichtung**
Tie bar-less mould clamping device
Dispositif de fermeture de moule sans colonnes

(30) Priorität: 23.09.1995 DE 19535412
(43) Veröffentlichungstag der Anmeldung: 26.03.1997
(73) Patentinhaber: HPM HEMSCHEIDT GmbH, 19061 Schwerin (DE)
(72) Erfinder: Wittstock, Volker, Dipl.-Ing., 19055 Schwerin (DE); Füller, Klaus, Dipl.-Ing., 19061 Schwerin (DE)
(74) Vertreter: UEXKÜLL & STOLBERG

(56) Entgegenhaltungen:
- EP-A- 0 311 133
- DE-A- 4 230 348
- DE-A- 19 511 808
- DE-C- 4 420 639
- FR-A- 2 112 221

## Beschreibung

Die Erfindung betrifft eine holmlose Formschließeinrichtung insbesondere für Spritzgießmaschinen zur Kunststoffverarbeitung, bestehend aus einem C-förmigen Maschinenrahmen, an dessen einem Schenkel eine feste Werkzeugaufspannplatte und an dessen anderem Schenkel eine Endplatte angeordnet sind. Dazwischen ist auf Führungen eine bewegliche Werkzeugaufspannplatte gegen die feste Werkzeugaufspannplatte in Richtung einer Spritzachse mit Hilfe eines hydraulischen Schließzylinders, längs verschiebbar. Der hydraulische Schließzylinder ist in der Endplatte gelagert und über die Kolbenstange mit der beweglichen Werkzeugaufspannplatte verbunden. Die feste und die bewegliche Werkzeugaufspannplatte besitzen senkrecht zur Spritzachse ausgerichtete Aufspannflächen zur Aufnahme der Formhälften eines Formwerkzeuges. Die während des Einspritz- und Aufreißvorganges durch den hydraulischen Schließzylinder erzeugte Schließ- und Aufreißkraft wird dabei vom Maschinenrahmen aufgenommen.
In der gattungsgemäßen älteren Anmeldung DE-C-4420639 wird eine Lösung beschrieben, bei der die bewegliche Werkzeugaufspannplatte horizontal in zwei im Abstand zueinander angeordneten Achsen auf Rollen gelagert ist, die auf Führungsschienen verfahrbar und abstützbar sind. Bei dieser und anderen bekannten holmlosen Formschließeinrichtungen wird durch die an der beweglichen Werkzeugaufspannplatte befestigte Formhälfte des Formwerkzeuges im geöffneten Zustand des Formwerkzeuges ein Moment erzeugt, das sich aus der Masse der bewegten Formhälfte des Formwerkzeuges und dem Abstand der vorderen Stützrolle ergibt und in Abhängigkeit von der Werkzeugeinbauhöhe unterschiedlich groß ausfallen kann. Dieses Moment des Formwerkzeuges wirkt der Masse der beweglichen Werkzeugaufspannplatte mit dem Werkzeugschlitten entgegen.
Besonders bei großen und schweren Formwerkzeugen kann es jedoch passieren, daß vor dem Schließvorgang des Formwerkzeuges die Formhälften nicht parallel zueinander stehen. Das kann beim Schließvorgang eine Überbeanspruchung bzw. Zerstörung der internen Werkzeugführungen zur Folge haben. Durch das vorhandene Spiel zwischen Kolbenstange und Schließzylinder wirken außerdem im Falle des Kippens der beweglichen Werkzeugaufspannplatte Querkräfte auf die Kolbenstangendichtungen, die außerdem noch stoßartig auftreten können. Ein weiterer Nachteil dieser Lösung besteht darin, daß die vorderen zum Werkzeugraum benachbarten Rollen wesentlich stärker als die hinteren Rollen belastet werden. Aufgabe der Erfindung ist es daher für eine holmlose Formschließeinrichtung von Spritzgießmaschinen eine einfache und konstengünstige Lösung zu schaffen, die ein Kippen der beweglichen Werkzeugaufspannplatte durch die unterschiedlichen Massen der zum Einsatz gelangenden Formwerkzeuge verhindert und die eine bessere Lastverteilung auf die Rollenführungen gewährleistet. Erfindungsgemäß wird die Aufgabe dadurch gelöst, daß an der Unterseite jeder Führungsschiene jeweils eine weitere Rolle anliegt, die über einen Hebel, der an der beweglichen Werkzeugaufspannplatte in einem Gelenk drehbeweglich aufgenommen wird, verbunden ist. Der Anlagepunkt der unteren Rolle besitzt einen horizontalen Abstand a zu der Achse des Gelenkes und an einem der beiden Hebelarme ist eine einstellbare Feder vorhanden. Über die einstellbare Feder ist der Hebel mit der beweglichen Werkzeugaufspannplatte verbunden. Ferner besitzt der Anlagepunkt der unteren Rolle einen horizontalen Abstand b von der vorderen Laufrolle der beweglichen Werkzeugaufspannplatte in Richtung der Endplatte. In der weiteren Ausgestaltung der Erfindung ist der Hebel, an dessen einem Ende die untere Rolle gelagert ist, als einarmiger Hebel ausgebildet, wobei dessen Drehachse parallel zur Spritzachse angeordnet ist. Ebenso kann der Hebel, an dem die untere Rolle gelagert ist, auch als zweiarmiger Hebel ausgebildet werden, wobei dann die Drehachse sich rechtwinklig zur Spritzachse befindet.
Eine andere Ausführungsform der Erfindung, die sowohl zusätzlich als auch separat bei holmlosen Formschließeinrichtungen realisierbar ist, sieht vor, daß die Kolbenstange des hydraulischen Schließzylinders durch zwei vertikal gegenüberliegende und auf der Spritzachse im Abstand c versetzt angeordnete federnde Abstützungen in der waagerechten Lage positionierbar ist.

Der Vorteil der Erfindung besteht darin, daß auf kleinem und engem Raum eine einfache und kostengünstige Lösung geschaffen wird, die es ermöglicht, daß zum Moment, das durch den bewegten Teil des Formwerkzeuges entsteht, ein einstellbares Gegenmoment erzeugt wird. Dadurch wird die vordere Rollenführung entlastet, die Parallelität der Formhälften zueinander vor dem Schließvorgang gewährleistet und die internen Werkzeugführungen werden beim Schließvorgang geschont.
Weitere Vorteile der Erfindung bestehen in einer einfachen Einstellmöglichkeit der Federvorspannung, wodurch gleichzeitig fertigungsbedingte Maßabweichungen kompensiert werden. Die eingestellte Federkraft kann durch Messen des Federweges ermittelt werden, wobei die Angabe eines Anzugsmomentes für die Einstellschraube entfällt.

Für die Ausführungsform der Erfindung, bei der die Kolbenstange des Schließzylinders durch zwei gegenüberliegende und versetzt zueinander angeordnete Abstützungen positionierbar ist, ergeben sich andere Vorteile. So ist es durch diese Lösung z. B. nicht erforderlich, daß die beim Schließvorgang bewegte Masse der beweglichen Werkzeugaufspannplatte, zur Kompensation des Werkzeugmomentes, erhöht werden muß. Hinzu kommt, daß die Hebelverhältnisse zwischen den federnden Abstüzungen und der hinteren Dichtung der Kolbenstange positionsunabhängig sind.

Die Erfindung wird nachstehend in einem Ausführungsbeispiel näher beschrieben. In den zugehörigen Zeichnungen ist dargestellt:
- Fig. 1: Gesamtansicht einer holmlosen Formschließeinrichtung
- Fig. 2: Eine Einzelheit X der unteren Wälzführung für die bewegliche Werkzeugaufspannplatte gemäß Fig. 1
- Fig. 3: Einen Teilquerschnitt gemäß der Linie A-A in Fig. 1 von der Einzelheit X nach Fig. 2
- Fig. 4: Eine andere Ausführungsform der Einzelheit X gemäß Fig. 1
- Fig. 5: Einen Teilquerschnitt gemäß der Linie A-A in Fig. 1 von der Einzelheit X nach Fig. 4
- Fig. 6: Eine vergrößerte Einzelheit Y von der Fig. 1 in der Ebene der Spritzachse mit einer anderen Ausführungsform der Erfindung.

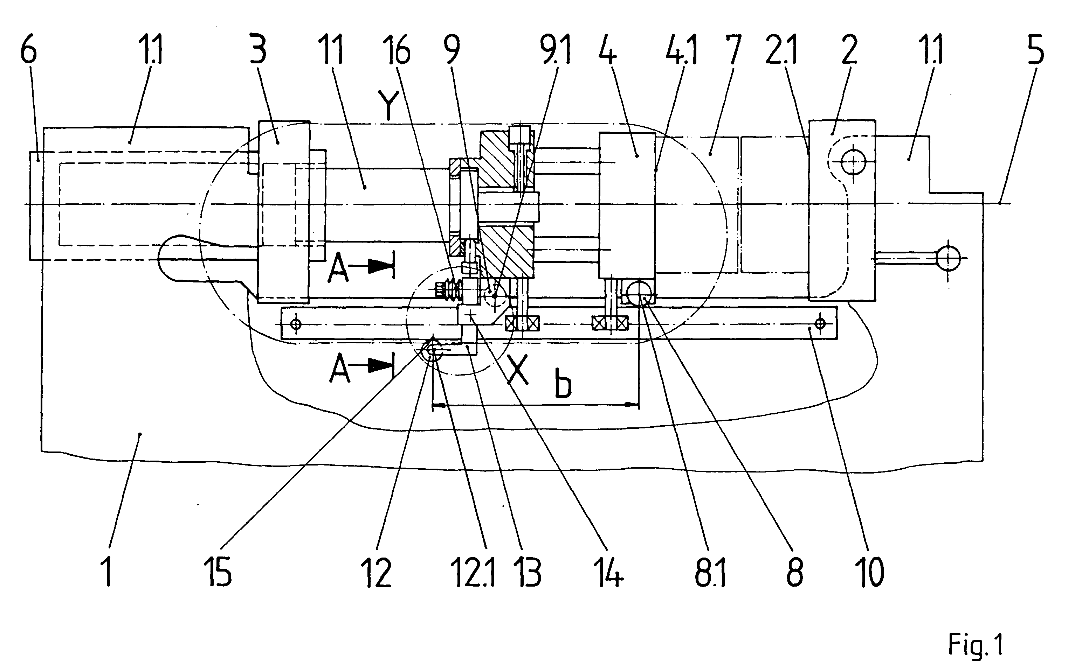

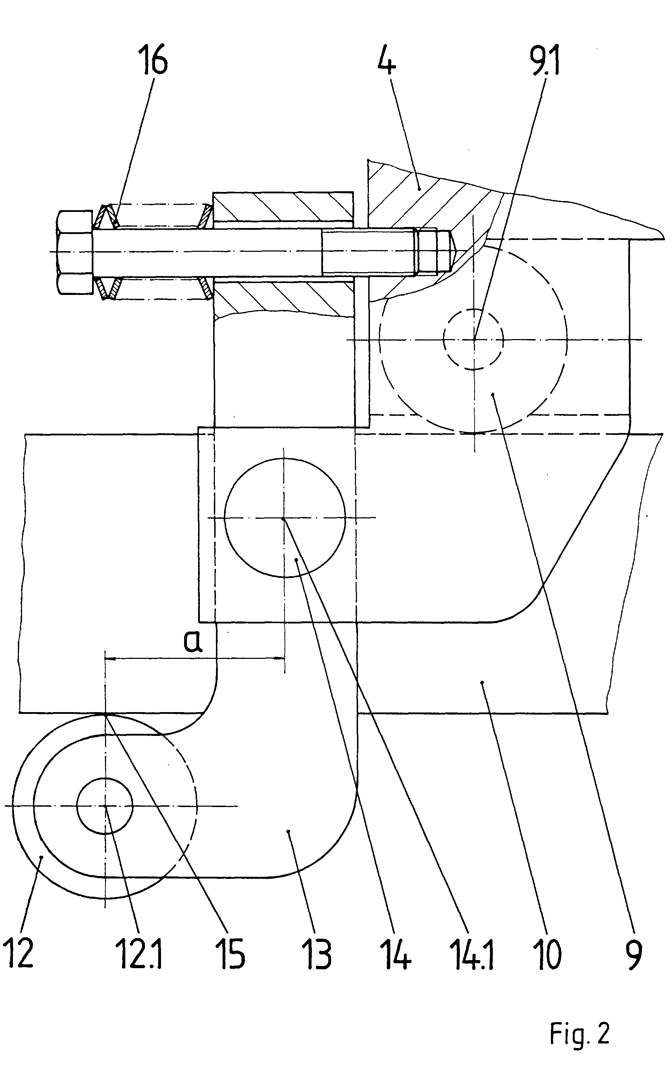

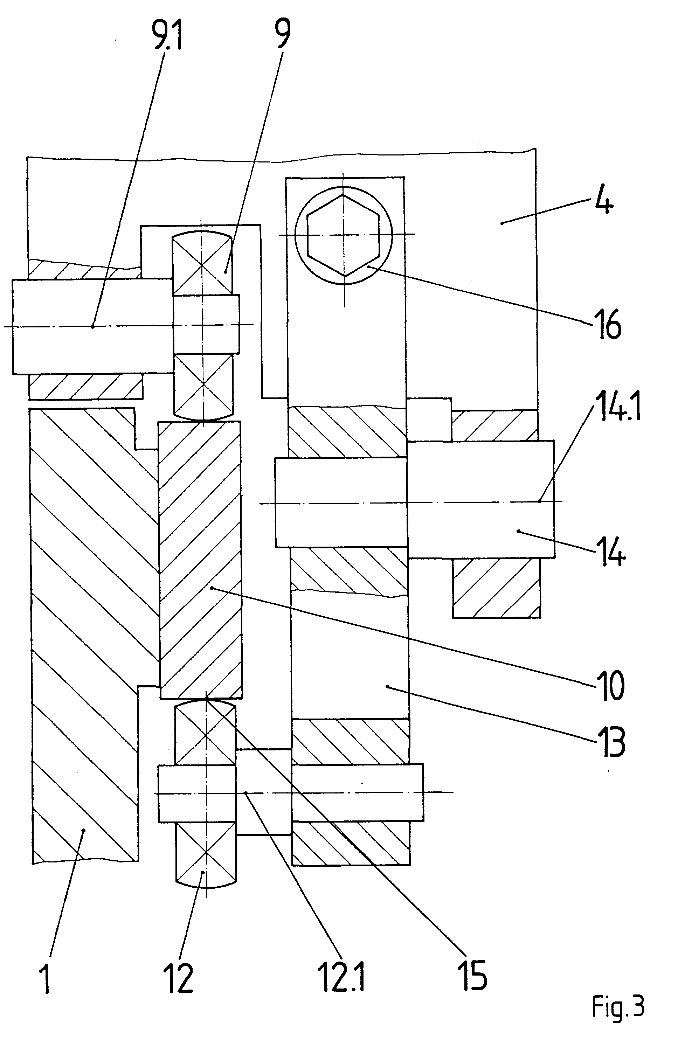

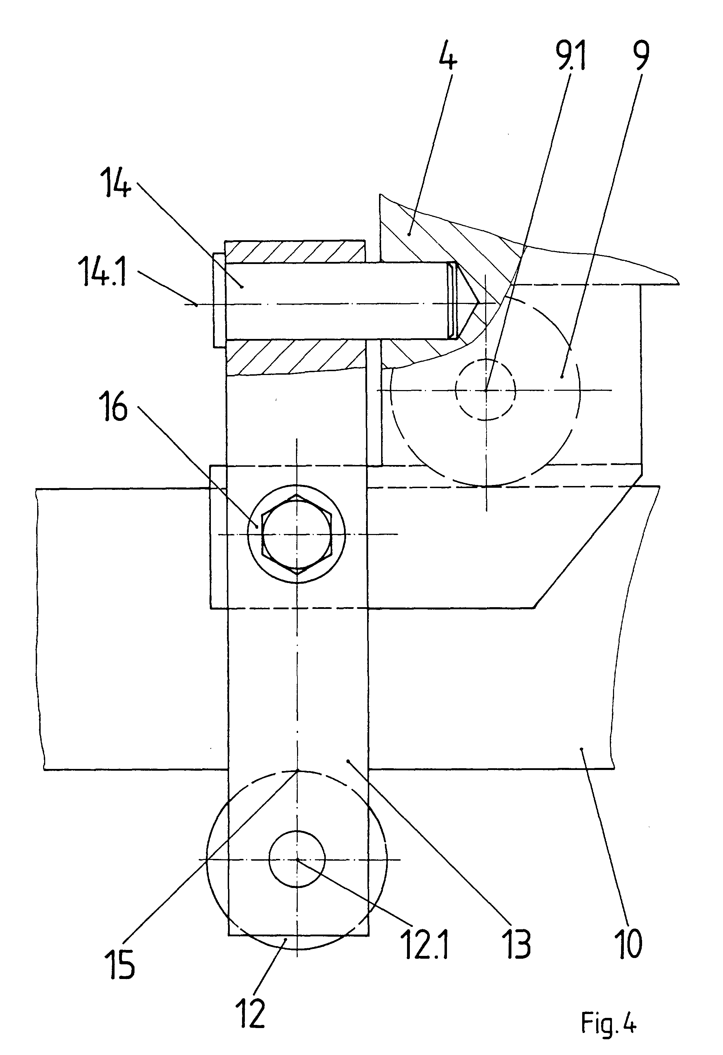

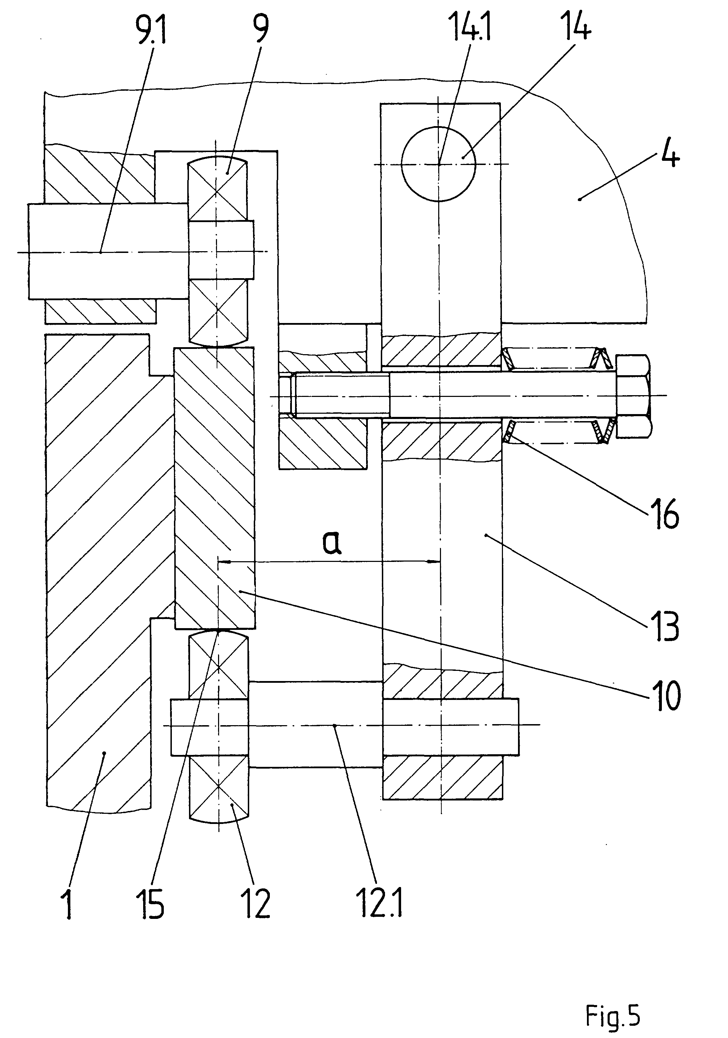

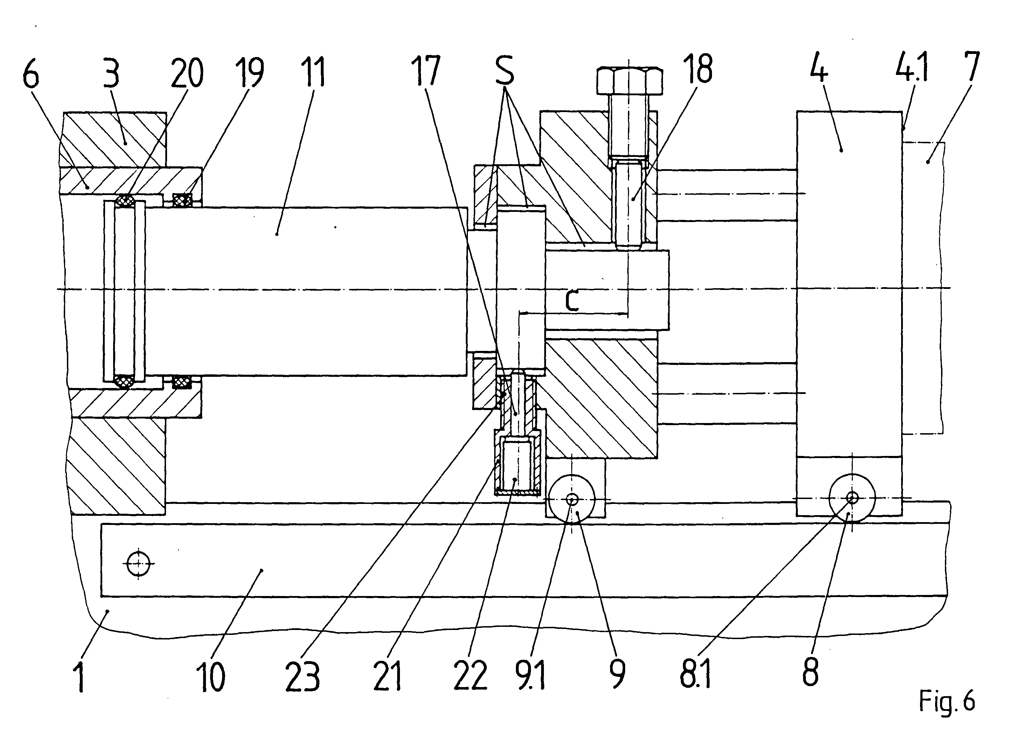

Aus Figur 1 ist eine holmlose Formschließeinrichtung für Spritzgießmaschinen erkennbar, die aus einem C-förmigen Maschinenrahmen 1 besteht. An einem Schenkel 1.1 des Maschinenrahmens 1 ist eine feste Werkzeugaufspannplatte 2 und am anderen Schenkel 1.1 eine Endplatte 3 befestigt. Dazwischen ist auf Führungsschienen 10 eine bewegliche Werkzeugaufspannplatte 4 gegen die feste Werkzeugaufspannplatte 2 in Richtung einer Spritzachse 5 mit Hilfe eines hydraulischen Schließzylinders 6 längsverschiebbar. Der Schließzylinder 6 ist in der Endplatte 3 gelagert. Die Kolbenstange 11 des Schließzylinders 6 ist mit der beweglichen Werkzeugaufspannplatte 4 verbunden. Die feste und die bewegliche Werkzeugaufspannplatte 2 und 4 besitzen senkrecht zur Spritzachse 5 ausgerichtete Aufspannflächen 2.1 und 4.1 zur Aufnahme der Formhälften eines Formwerkzeuges 7. Die während des Einspritz- und Aufreißvorganges erzeugte Schließ- und Aufreißkraft wird dabei vom Maschinenrahmen 1 aufgenommen. Die bewegliche Werkzeugaufspannplatte 4 ist horizontal in zwei im Abstand zueinander angeordneten Achsen 8.1 und 9.1 auf Laufrollen 8 und 9 gelagert, die auf den Führungsschienen 10 verfahrbar und abstützbar sind. Nach der Erfindung ist an der Unterseite jeder Führungsschiene 10 jeweils eine weitere Laufrolle 12 angeordnet, die an der Führungsschiene 10 im Anlagepunkt 15 anliegt. Die Laufrolle 12 ist über einen Hebel 13, der an der beweglichen Werkzeugaufspannplatte 4 in einem Gelenk 14 drehbeweglich aufgenommen wird, verbunden. Der Anlagepunkt 15 hat einen horizontalen Abstand b von der vorderen Achse 8.1 der Laufrolle 8 der beweglichen Werkzeugaufspannplatte 4 in Richtung der Endplatte 3. In den Figuren 2 und 5 sind zwei Ausführungsformen zur Gestaltung des Hebels 13 dargestellt. Aus beiden Figuren ist ersichtlich, daß zwischen dem Anlagepunkt 15 und der Achse des Gelenkes 14.1 ein horizontaler Abstand a vorhanden sein muß. Die Hebel 13 werden in beiden Figuren 2 und 5 durch einstellbare Federn 16, die im Ausführungsbeispiel als Tellerfedern ausgebildet sind, gespannt. Mit Hilfe der einstellbaren Federn 16 ist es möglich, ein definiertes Gegenmoment zur Formhälfte des Formwerkzeuges 7 an der beweglichen Werkzeugaufspannplatte 4, bezüglich der vorderen Achse 8.1, der beweglichen Werkzeugaufspannplatte 4 zu erzeugen. Bei vorhandener Unparallelität der Formhälften des Formwerkzeuges 7 kann bei Einwirkung der Schließ- und Aufreißkraft in bestimmten Fällen die bewegliche Werkzeugaufspannplatte 4 nach oben angehoben werden. In so einem Falle schützt die eingebaute Feder 16 alle mechanischen Übertragungselemente zwischen der Laufrolle 12 und der beweglichen Werkzeugaufspannplatte 4. In der Figur 2 ist eine Ausführungsform der Erfindung mit einem zweiarmigen Hebel dargestellt, während die Figur 5 eine einarmige Hebelkonstruktion zeigt. Ein weiterer Unterschied zwischen den beiden Figuren besteht darin, daß in Figur 2 der Hebel 13 als Winkelhebel ausgebildet sein muß, um den horizontalen Abstand b zu gewährleisten. Aus Figur 4 und 5 ist ersichtlich, daß die Achse 14.1 des Gelenkes 14 parallel zur Spritzachse 5 angeordnet ist, wodurch eine einfache Hebelkonstruktion möglich ist. Zum besseren Verständnis der in den Figuren 2 und 5 dargestellten Ausführungsformen der Erfindung wurden in den Figuren 3 und 4 dazu die entsprechenden Seitenansichten dargestellt. Die in den Figuren 2 bis 5 beschriebene Lösung ist vorteilhaft für Formschließeinrichtungen, die größere Schließkräfte übertragen, einsetzbar.
Eine weitere Ausführungsform der Erfindung betrifft eine andere Möglichkeit ein Gegenmoment zum Formwerkzeug zu erzeugen. In Figur 6 ist diese Ausführungsform dargestellt, die vorteilhaft für kleinere Schließkräfte einsetzbar ist, wobei auch beide Lösungen miteinander kombinierbar sein können, wie aus Figur 1 ersichtlich ist. Die Darstellung in Figur 6 zeigt den Schließzylinder 6 mit der Kolbenstange 11. Die Besonderheit dieser Ausführungsform besteht darin, daß die Kolbenstange 11 des hydraulischen Schließzylinders 6 durch zwei vertikal gegenüberliegende federnde Abstützungen 17 und 18, die auf der Spritzachse um den Abstand c versetzt zueinander angeordnet sind, in der waagerechten Lage positionierbar ist. Durch die untere federnde Abstützung 17 ist die Achse der Kolbenstange 11 auf die Spritzachse 5 vertikal einstellbar. Gleichzeitig wird dadurch die vordere Dichtung 19 der Kolbenstange 11 entlastet. Voraussetzung dafür ist, daß zwischen der Kolbenstange und der beweglichen Werkzeugaufspannplatte 4 ein Spiel s vorhanden sein muß. Außerdem bewirkt die obere federnde Abstützung 18 der Kolbenstange, daß ein Teil der Massenkraft auf die bewegliche Werkzeugaufspannplatte übertragen wird. Das hat zur Folge, daß ein Moment um die vordere Achse 8.1 der beweglichen Werkzeugaufspannplatte 4 entsteht. Dieses Moment wirkt dem Moment des Formwerkzeuges 7 entgegen. Die zusätzliche Verstellung der oberen federnden Abstützung 18 entlastet außerdem die hintere Dichtung 20 der Kolbenstange 11 im unteren Bereich. Mit dieser Maßnahme wird das Moment, das um die vordere Achse 8.1 der Laufrolle 8 wirkt und dem Werkzeugmoment entgegenwirkt, gesteigert. Wird die Vorspannung der oberen federnden Abstützung weiter erhöht, so führt das zu einer Belastung der hinteren Dichtung 20 im oberen Bereich. Gleichzeitig muß mit dieser Maßnahme gewährleistet sein, daß eine konstante Vorspannung der unteren federnden Abstützung 17 erhalten bleibt. Bei allen diesen Maßnahmen ist zu beachten, daß das gegenläufige Moment um die Achse 9.1 der Laufrolle 9 nicht größer wird als das Moment der beweglichen Werkzeugaufspannplatte 4 um die Achse 9.1 ohne Formwerkzeug, da sonst die bewegliche Werkzeugaufspannplatte 4 ausgehoben wird. Die untere federnde Abstützung 17 besteht aus einer vorgespannten Feder 22, die von einer Hülse 21 umschlossen wird. Mit einer Schraubverbindung 23 ist die federnde Abstützung 17 einstellbar. Die obere federnde Abstützung 18 kann analog ausgebildet sein. Der Vorteil dieser Ausführungsform besteht darin, daß die gesamte beim Schließvorgang bewegte Masse nicht erhöht werden muß, um einen Kippvorgang durch die Massenkraft des Formwerkzeuges auszuschließen. Ferner sind die Hebelverhältnisse zwischen den federnden Abstützungen 17 und 18 und der hinteren Dichtung 20 von der Kolbenstange 11 positionsunabhängig.

### Aufstellung der verwendeten Bezugszeichen

- 1 -: Maschinenrahmen
- 1.1 -: Schenkel des Maschinenrahmens
- 2 -: Werkzeugaufspannplatte (fest)
- 2.1 -: Aufspannfläche
- 3 -: Endplatte
- 4 -: Werkzeugaufspannplatte (beweglich)
- 4.1 -: Aufspannfläche
- 5 -: Spritzachse
- 6 -: Hydraulischer Schließzylinder
- 7 -: Formwerkzeug
- 8 -: Laufrolle (vorn)
- 8.1 -: Achse der Laufrolle (vorn)
- 9 -: Laufrolle (hinten)
- 9.1 -: Achse der Laufrolle (hinten)
- 10 -: Führungsschiene
- 11 -: Kolbenstange
- 12 -: Laufrolle (unten)
- 12.1 -: Achse der Laufrolle (unten)
- 13 -: Hebel
- 14 -: Gelenk
- 14.1 -: Achse des Gelenkes
- 15 -: Anlagepunkt
- 16 -: Feder
- 17 -: Abstützung (unten)
- 18 -: Abstützung (oben)
- 19 -: Dichtung (vorn)
- 20 -: Dichtung (hinten)
- 21 -: Hülse
- 22 -: Feder
- 23 -: Schraubverbindung

- a -: Abstand (horizontal)
- b -: Abstand (horizontal)
- c -: Abstand
- s -: Spiel

## Patentansprüche

1. Holmlose Formschließeinrichtung für Spritzgießmaschinen zur Kunststoffverarbeitung, bestehend aus einem C-förmigen Maschinenrahmen (1) an dessen einem Schenkel (1.1) eine feste Werkzeugaufspannplatte (2) und an dessen anderem Schenkel (1.1) eine Endplatte (3) angeordnet sind, dazwischen auf Führungen eine bewegliche Werkzeugaufspannplatte (4), die gegen die feste Werkzeugaufspannplatte (2) in Richtung einer Spritzachse (5) mit Hilfe eines hydraulichen Schließzylinders (6), der in der Endplatte (3) gelagert ist und mit der beweglichen Werkzeugaufspannplatte (4) verbunden ist, längsverschiebbar ist, die feste und die bewegliche Werkzeugaufspannplatte (2;4) senkrecht zur Spritzachse (5) ausgerichtete Aufspannflächen (2.1; 4.1) zur Aufnahme der Formhälften eines Formwerkzeuges (7) besitzen und die Schließ- und Aufreißkraft, die während des Einspritz- und Aufreißvorganges durch den hydraulischen Schließzylinder (6) erzeugt wird, vom Maschinenrahmen (1) aufgenommen wird, wobei die bewegliche Werkzeugaufspannplatte (4) horizontal in zwei im Abstand zueinander angeordneten Achsen (8.1; 9.1) auf Rollen (8; 9) gelagert ist, die auf den Führungsschienen (10) verfahrbar und abstützbar sind, dadurch gekennzeichnet, daß
- an der Unterseite jeder Führungsschiene (10) jeweils eine weitere Laufrolle (12) anliegt, die über einen Hebel (13), der an der beweglichen Werkzeugaufspannplatte (4) in einem Gelenk (14) drehbeweglich aufgenommen wird, verbunden ist,
- die untere Laufrolle (12) einen Anlagepunkt (15) hat, der einen horizontalen Abstand (a) zu der Achse (14.1) des Gelenkes (14) besitzt,
- an einem der beiden Hebelarme eine einstellbare Feder (16) vorhanden ist, die den Hebel (13) mit der beweglichen Werkzeugaufspannplatte (4) verbindet und
- der Anlagepunkt (15) der unteren Laufrolle (12) an der abgewandten Seite des Formwerkzeuges (7) einen horizontalen Abstand (b) von der vorderen Laufrolle (8) der beweglichen Werkzeugaufspannplatte (4) hat.

2. Holmlose Formschließeinrichtung nach Anspruch 1, dadurch gekennzeichnet, daß der Hebel (13), an dessen einem Ende die Laufrolle (12) gelagert ist, als einarmiger Hebel ausgebildet ist, wobei dessen Drehachse (14.1) parallel zur Spritzachse (5) angeordnet ist.

3. Holmlose Formschließeinrichtung nach Anspruch 1, dadurch gekennzeichnet, daß der Hebel (13), an dessen einem Ende die Laufrolle (12) gelagert ist, als zweiarmiger Hebel ausgebildet ist, wobei dessen Drehachse (14.1) rechtwinklig zur Spritzachse (5) angeordnet ist.

4. Holmlose Formschließeinrichtung nach dem Oberbegriff von Anspruch 1, dadurch gekennzeichnet, daß die Kolbenstange (11) des hydraulischen Schließzylinders (6) durch eine untere federnde Abstützung (17) in der waagerechten Lage positionierbar ist.

5. Holmlose Formschließeinrichtung nach dem Oberbegriff von Anspruch 1, dadurch gekennzeichnet, daß die Kolbenstange (11) des hydraulischen Schließzylinders (6) durch zwei vertikal gegenüberliegende und auf der Spritzachse (5)im Abstand (c) versetzt angeordnete federnde Abstützungen(17, 19), in der waagerechten Lage positionierbar ist.

## Claims

1. A tie bar-less mould clamping device for injection moulding machines for plastics processing, comprising a C-shaped machine frame (1), on one limb (1.1) of which a fixed tool clamping plate (2) is arranged and on the other limb (1.1) an end plate (3) is arranged, between which a mobile tool clamping plate (4) is longitudinally displaceable on guide rails (10) against the fixed tool clamping plate (2) in the direction of an injection axis (5) with the aid of a hydraulic closing cylinder (6) arranged in end plate (3) and which is connected to the mobile tool clamping plate (4), the fixed and the mobile tool clamping plate (2;4) have clamping surfaces (2.1:4.1) arranged perpendicular to injection axis (5) for incorporating the mould halves of a mould tool (7), and the closing and opening forces produced during the injection and pulling apart process are incorporated by machine frame (1), where mobile tool clamping plate (4) is positioned horizontally on rollers (8,9) in two axes (8.1;9.1) arranged spaced from one another, which can be transported and supported on guide rails (10), characterised in that
- respectively a further roller (12) abuts on the underside of each guide rail (10), which is connected via a lever (13) which is rotatably incorporated in a joint (14) to the mobile tool clamping plate (4),
- an adjustable spring (16) is present on one of the two lever arms which connects lever (13) with mobile tool clamping plate (4) and
- contact point (15) of lower roller (12) on the opposite side of mould tool (7) has a horizontal distance (b) from forward roller (8) of mobile tool clamping plate (4).

2. A tie bar-less mould clamping device according to claim 1, characterised in that lever (13) - on whose one end roller (12) is positioned - is constructed as a single-arm lever, and where the axis of rotation of which (14.1) is arranged parallel to injection axis (5).

3. A tie bar-less mould clamping device according to claim 1, characterised in that lever (13) - on whose one end roller (12) is positioned - is constructed as a two-arm lever, and where the axis of rotation (14.1) is arranged at right angles to injection axis (5).

4. A tie bar-less mould clamping device according to the precharacterising clause of claim 1, characterised in that the piston rods (11) of the hydraulic closing cylinder (6) can be positioned in the horizontal position by means of a lower flexible support (17).

5. A tie bar-less mould clamping device according to the precharacterising clause of claim 1, characterised in that piston rods (11) of the hydraulic closing cylinder (6) can be positioned in the horizontal position by means of two flexible supports (17,19), located opposite one another and arranged staggered in distance (c) along injection axis (5).

## Revendications

1. Installation de fermeture de moule sans colonnes pour des machines d'injection de matière plastique, comprenant
- un châssis de machine (1) en forme de C dont une branche (1.1) comporte une plaque fixe (2) de montage d'outil, et dont l'autre branche (1.1) comporte une plaque d'extrémité (3) ainsi que, dans l'intervalle, sur des rails de guidage (10), une plaque mobile (4) de montage d'outil, cette plaque pouvant être déplacée par rapport à la plaque fixe (2) en direction de l'axe d'injection (5) à l'aide d'un vérin hydraulique de fermeture (6) monté dans la plaque d'extrémité (3) et relié à la plaque mobile (4) par coulissement longitudinal,
la plaque fixe (2) et la plaque mobile (4) ayant des surfaces de montage d'outil (2.1 ; 4.1) perpendiculaires à l'axe d'injection (5) pour recevoir les moitiés d'un outil de moulage (7), et
le vérin hydraulique de fermeture (6) générant la force de fermeture et d'ouverture pour l'injection et l'ouverture, force qui est reçue par le châssis (1) de la machine,
la plaque mobile (4) étant montée mobile horizontalement sur deux galets (8 ; 9) ayant des axes (8.1 ; 9.1) distants l'un de l'autre, mobiles sur des rails de guidage (10) et s'y appuyant,
caractérisée en ce qu'
- un autre galet de roulement (12) vient contre la face inférieure de chaque rail de guidage (10), ce galet étant relié par un levier (13) à la plaque mobile (4) par l'intermédiaire d'une articulation (14) permettant la mobilité en rotation,
- le galet de roulement (12), inférieur, a un point d'appui (15) qui est à une distance horizontale (a) de l'axe (14.1) de l'articulation (14),
- sur l'un des deux bras de levier on a un ressort réglable (16) qui relie le levier (13) à la plaque mobile (4) de montage d'outil, et
- le point d'articulation (15) du galet inférieur (12) est à une distance horizontale (b) du galet de roulement avant (8) du panneau mobile (4) du côté opposé à l'outil de moulage (7).

2. Installation de fermeture de moule sans colonnes selon la revendication 1,
caractérisée en ce que
le levier (13), dont une extrémité porte le galet de roulement (12), est un levier à un bras dont l'axe de rotation (14.1) est parallèle à l'axe d'injection (5).

3. Installation de fermeture de moule sans colonnes selon la revendication 1,
caractérisée en ce que
le levier (13), dont une extrémité porte le galet de roulement (12), est un levier à deux bras dont l'axe de rotation (14.1) est perpendiculaire à l'axe d'injection (5).

4. Installation de fermeture de moule sans colonnes selon le préambule de la revendication 1,
caractérisée en ce que
la tige de piston (11) du vérin hydraulique de fermeture (6) est positionnée horizontalement par un appui élastique inférieur (17).

5. Installation de fermeture de moule sans colonnes selon le préambule de la revendication 1,
caractérisée en ce que
la tige de piston (11) du vérin hydraulique de fermeture (6) est positionnée horizontalement par deux appuis élastiques (17, 19) verticalement opposés, décalés de la distance (c) suivant l'axe d'injection (5).
